Europäisches Patentamt

European Patent Office

Office européen des brevets

(11) Publication number: **0 479 311 A2**

## (12) EUROPEAN PATENT APPLICATION

(21) Application number: **91116971.2**

(22) Date of filing: **04.10.91**

(51) Int. Cl.5: **C09J 153/00**, //(C09J153/00, 201:00)

(30) Priority: **05.10.90 JP 268156/90**

(43) Date of publication of application:
**08.04.92 Bulletin 92/15**

(84) Designated Contracting States:
**DE FR GB IT**

(71) Applicant: **NIPPON ZEON CO., LTD.**
**6-1, 2-chome, Marunouchi, Chiyoda-ku**
**Tokyo(JP)**

(72) Inventor: **Ishiguro, Minoru**
**Sanraifu Negishi 411, 2813-2, Negishi**
**Kawaguchi-shi, Saitama-ken(JP)**
Inventor: **Hirokawa, Yoshitsugu**
**2-26-3-101, Kajihara**
**Kamakura-shi, Kanagawa-ken(JP)**

(74) Representative: **Kraus, Walter, Dr. et al**
**Patentanwälte Kraus, Weisert & Partner**
**Thomas-Wimmer-Ring 15**
**W-8000 München 22(DE)**

(54) **Tackifier composition.**

(57) A tackifier composition comprising
(a) 100 parts by weight of a block copolymer composed of at least two terminal polymer blocks A and at least one intermediate polymer block B, said block A being a polymer block substantially derived from an aromatic vinyl compound, said block B being a polymer block substantially derived from isobutylene, the content of the aromatic vinyl compound being 5 to 50 % by weight, and the number average molecular weight of the block copolymer being 30,000 to 500,000,
(b) 20 to 200 parts by weight of a tackifier resin, and
(c) 5 to 150 parts by weight of a softener.

This invention relates to a novel tackifier composition. More specifically, this invention relates to a novel tackifier composition having stability to heat or ultraviolet rays and excellent tackiness.

Heretofore, tacky tapes, tacky sheets, etc. obtained by coating tackifier compositions comprising conjugated diene rubbers such as a natural rubber, a polyisoprene rubber, a styrene-butadiene random copolymer, a styrene-isoprene block copolymer, a styrene-butadiene block copolymer, etc., various tackifier resins and softeners onto craft papers, Japanese papers or various plastic films have been industrially used in large quantities.

Since unvulcanized conjugated diene rubbers are substantially unstable to heat or ultraviolet rays, tackifiers based on the conjugated diene rubbers are poor in heat stability and weatherability and are thus much limited in their use field.

Therefore, a tackifier composition obtained by blending polyisobutylene or a butyl rubber resulting from copolymerization of isobutylene and a small amount of isoprene with a tackifier resin and a softener has been developed and used in a rust-proofing tape of a steel pipe requiring weatherability. However, it has poor cohesive force.

Meanwhile, an adhesive composition has been developed which is obtained by blending a hydrogenated product of a block copolymer composed of an aromatic vinyl compound and a conjugated diene compound with a tackifier resin and a softener (Japanese Laid-open Patent Application No. 40,833/1973). As this composition is however poor in tackiness, above all, tackiness at low temperatures, it has not been widely used.

The present inventors have made assiduous studies to solve such problems associated with the prior art, and have consequently found that a tackifier composition having stability to heat and ultraviolet rays and excellent tackiness is obtained by blending a block copolymer of an aromatic vinyl compound and isobutylene having a specific structure, a specific composition and a specific average molecular weight with a tackifier resin and a softener. This finding has led to completion of this invention.

Thus, according to this invention, there is provided a tackifier composition comprising

(a) 100 parts by weight of a block copolymer composed of at least two terminal polymer blocks A and at least one intermediate polymer block B, said block A being a polymer block substantially derived from an aromatic vinyl compound, said block B being a polymer block substantially derived from isobutylene, the content of the aromatic vinyl compound being 5 to 50 % by weight, and the number average molecular weight of the block copolymer being 30,000 to 500,000,

(b) 20 to 200 parts by weight of a tackifier resin, and

(c) 5 to 150 parts by weight of a softener.

The block copolymer (a) constituting the tackifier composition of this invention may be a block copolymer substantially composed of at least two terminal polymer blocks (A) derived from an aromatic vinyl compound and at least one intermediate polymer block (B) derived from isobutylene. For example, said block copolymer (a) may be a linear block copolymer having two terminal polymer blocks or a radial block copolymer having three or more terminal polymer blocks.

A method for producing the block copolymer (a) is not particularly limited. For example, a method is taken in which an aromatic vinyl compound and isobutylene are polymerized in an inert solvent such as hexane or methylene chloride in the presence of an initiator composed of Lewis acid and an organic compound (hereinafter referred to as an "initiator compound") forming a cationically polymerizable seed in combination with Lewis acid by adding a third component such as an amine, if required (Japanese Patent Application No. 80639/1990). The initiator compound here referred to is an organic compound having a functional group such as an alkoxy group, an acyloxy group or a halogen. Examples of the organic compound are bis(2-methoxy-2-propyl)benzene, bis(2-acetoxy-2-propyl)benzene and bis(2-chloro-2-propyl)-benzene.Lewis acid is, for example, titanium tetrachloride. The amine is, for example, triethylamine.

The block copolymer (a) which is the linear block copolymer can be obtained, for example, by a method which comprises using an initiator compound having one functional group such as a halogen, an alkoxy group or an acyloxy group and Lewis acid as an initiator system, polymerizing an aromatic vinyl compound until the polymerization of an aromatic vinyl compound substantially completes, then introducing isobutylene into the reaction system to carry out a further polymerization isobutylene until the polymerization of isobutylene substantially completes, and introducing the aromatic vinyl compound again into the reaction system, and conducting the polymerization. Preferably, a block copolymer with a molecular structure and a molecular weight distribution well controlled is afforded by a method which comprises using an initiator compound having two functional groups and Lewis acid as an initiator system, polymerizing isobutylene until the polymerization of isobutylene substantially completes, introducing an aromatic vinyl compound into the reaction system, and conducting the polymerization. The block copolymer (a) which is the radial block copolymer is provided by a method which comprises using an initiator compound having

EP 0 479 311 A2

three or more functional groups and Lewis acid as an initiator system, polymerizing isobutylene until the polymerization of isobutylene substantially completes, then introducing an aromatic vinyl compound into the reaction system, and conducting the polymerization.

At least two terminal polymer blocks A constituting the block copolymer (a) in this invention are derived from an aromatic vinyl compound such as styrene, alpha-methylstyrene, beta-methylstyrene, p-methylstyrene, tert-butylstyrene, monochlorostyrene, dichlorostyrene, indene or methoxystyrene.

The content of the aromatic vinyl compound in the block copolymer (a) is 5 to 50 % by weight, preferably 10 to 45 % by weight. When the content is less than 5 % by weight, cohesion as a tackifier composition is not sufficient. When it exceeds 50 % by weight, sufficient tackiness cannot be imparted.

The number average molecular weight of the block copolymer (a) is 30,000 to 500,000, preferably 50,000 to 400,000. When said number average molecular weight is less than 30,000, cohesion as a tackifier composition is not sufficient. When it exceeds 500,000, sufficient tackiness cannot be imparted, and when the tackifier composition is kneaded by a hot melt method, viscosity becomes extremely high, making the handling hard.

By the way, the block copolymer (a) in this invention may contain a homopolymer of isobutylene or an aromatic vinyl compound, a di-block copolymer composed of a polymer block derived from an aromatic vinyl compound and a polymer block derived from isobutylene, or a multi-block copolymer formed by alternately binding at least two polymer blocks derived from isobutylene with at least one polymer block derived from an aromatic vinyl compound.

The tackifier resin (b) constituting the tackifier composition of this invention is a resin having a number average molecular weight of 300 to 3,000 and a softening point of 60 to 130°C as measured by a ring and ball method according to JIS K-2207. Examples of the tackifier resin (b) are rosins, rosin derivatives, polyterpene resins, modified aromatic terpene resins, hydrogenated products thereof, terpene phenol resins, coumarone-indene resins, aliphatic petroleum resins, aromatic petroleum resins, hydrogenated products thereof, aliphatic aromatic copolymer-type petroleum resins, dicyclopentadiene-type petroleum resins, hydrogenated products thereof, and polymers of styrene or substituted styrene.

In order to achieve the purpose of this invention, it is necessary to use the tackifier resin (b) compatible with the polymer corresponding to the block B, i.e., the polymer derived from isobutylene. Desirable examples of the tackifier resin (b) are hydrogenated products of polyterpene resins, aliphatic petroleum resins and aromatic petroleum resins. In order to improve cohesion of the tackifier composition in this invention, it is advisable to use the tackifier resin (b) compatible with the polymer corresponding to the block A, i.e., the polymer derived from the aromatic vinyl compound, examples of the tackifier resin (b) being coumarone-indene resins or polymers of styrene or substituted styrene.

Examples of the softener (C) constituting the tackifier composition of this invention are petroleum process oils, natural oils, dibasic acid dialkyl esters, and liquid polymers. Examples of the petroleum process oils are paraffinic process oils, naphthenic process oils, and aromatic process oils. Examples of the natural oils are a castor oil and a tall oil. Examples of the dibasic acid dialkyl esters are dibutyl phthalate, dioctyl phthalate, and dibutyl adipate. Examples of the liquid polymer are liquid polybutene and liquid polyisoprene. Of these, the paraffinic process oils and the liquid polybutene are especially preferable because they provide tackifiers having stability to heat or ultraviolet rays in particular and excellent hue.

The proportions of the block copolymer (a), the tackifier resin (b) and the softener (c) in the tackifier composition of this invention are not necessarily uniform depending on a desirous use field. Usually, 100 parts by weight of the block copolymer (a) are blended with 20 to 200 parts by weight, preferably 30 to 180 parts by weight of the tackifier resin (b), and 5 to 150 parts by weight, preferably 10 to 130 parts by weight of the softener (c). When said propertions are derivated from the foregoing, it is hard to provide well-balanced properties as a tackifier.

Incidentally, the tackifier composition of this invention can contain other rubber components unless the purpose of this invention is substantially impaired, and it may further contain an antioxidant, a pigment and a filler as required.

The tackifier composition of this invention can be obtained by (1) a mechanical mixing method using rolls or a Banbury mixer, (2) a hot melt method in which heat-mixing is conducted with a melting kettle fitted with a stirrer or a monoaxial or biaxial extruder, or (3) a solvent method in which a uniform solution of a tackifier composition is obtained by charging components in a suitable solvent and stirring them.

Various tacky tapes or sheets can be produced by coating the tackifier composition of this invention either as such or in the form of a solution dissolved in a suitable solvent onto a support such as sheets or plastic films, and drying the coated product if required.

The tackifier composition of this invention can also be used as an adhesive or a sealant by fluidizing said composition upon melting it with heat or dissolving it in a suitable solvent.

3

Thus, in accordance with this invention, there can be obtained a tackifier composition having excellent stability to heat or ultraviolet rays compared with a conventional rubber tackifier based on a conjugated diene rubber, and having well-balanced tackiness compared with a tackifier based on a butyl rubber or a tackifier based on a hydrogenated product of a block copolymer composed of styrene and butadiene.

The following Examples, Comparative Examples and Referential Example illustrate this invention more specifically. However, this invention is not limited thereto. Unless otherwise indicated, parts and percentages in said Examples are all by weight.

REFERENTIAL EXAMPLE

Using 440 parts of dichloromethane, 220 parts of n-hexane, 0.46 part of 1,4-bis(2-chloro-2-propyl)-benzene, 0.51 part of triethylamine, and a methylene chloride/n-hexane (volume ratio 1/1) solution of 0.3 M titanium tetrachloride, and isobutylene in an amount shown in Run No. 1, 2 or 3 in Table 1 was polymerized at -65°C for 4 hours. Then, styrene was added in an amount shown in Table 1, and the polymerization reaction further continued for 2 hours to obtain three types of styrene-isobutylene-styrene block copolymers $(a_1)$, $(a_2)$ and $(a_3)$. The yield of each of the polymers was substantially 100%.

The content of bound styrene, the average molecular weights, and the ununiformity index of the molecular weight distribution (the weight average molecular weight/number average molecular weight ratio) of the resulting block copolymer are shown in Table 1.

## Table 1

| Run No. | 1 | 2 | 3 |
|---|---|---|---|
| Block copolymer | $(a_1)$ | $(a_2)$ | $(a_3)$ |
| Isobutylene (parts) | 100 | 142 | 85 |
| Styrene (parts) | 42 | 61 | 57 |
| Content of bound styrene (%) | 30 | 29 | 40 |
| Weight average molecular weight x $10^{-4}$ | 15.5 | 23.0 | 17.3 |
| Number average molecular weight x $10^{-4}$ | 10.0 | 13.8 | 10.2 |
| Ununiformity index | 1.55 | 1.67 | 1.70 |

The content of bound styrene was measured by NMR. The weight average molecular weight, the number average molecular weight and the molecular weight distribution were calculated from a molecular weight distribution curve measured by high-performance liquid chromatography (HLC-802A, a device of Tohsoh K.K.) on the basis of a calibration curve which was previously found by results of analysis of standard polystyrene whose molecular weight is known. The measurement was conducted by a combination of columns G-4000H and G-5000H filled with poly styrene gel under such conditions that a column temperature was 40°C, a carrier (tetrahydrofuran) flow rate 1.3 ml/min and a sample concentration 0.6 g/l.

EXAMPLES 1 to 3 and COMPARATIVE EXAMPLE 1

One hundred parts of each of the three styrene-isobutylene-styrene block copolymers $(a_1)$, $(a_2)$ and $(a_3)$ shown in Referential Example, 50 parts of an aliphatic petroleum resin ("QUINTONE C100": a trade name for a product of Nippon Zeon Co., Ltd., a softening point 96°C), 50 parts of liquid polybutene ("POLYBUTENE 300H": a trade name for a product of Idemitsu Sekiyu Kagaku K.K.) and 1 part of an antioxidant were dissolved in toluene to prepare a tackifier solution having a non-volatile content of 25 %. Subsequently, the solution was coated onto a 25-micron thick polyester film to a coating thickness of 25 microns to prepare a tacky tape. The tackiness, the adhesion and the retention thereof were then measured. Meanwhile, for comparison, a butyl rubber ("BUTYL 268": a trade name for a product of Exxon Kagaku K.K.) ordinarily used in a tackifier for a steel pipe protecting tape was evaluated as above.

The tackiness was measured according to JIS Z-0237. Thirty steel balls having different sizes from 3/32 inch to inch were rolled at an initial speed of 0 on an inclined surface of a stainless steel sheet having an angle of inclination of 30° at 23°C from a position of 10 cm above a 10 cm long tacky tape adhered with a tacky surface up. The tackiness was displayed by a size of a ball with a maximum diameter which was stopped on the sticky tape.

The adhesion was measured according to JIS Z-0237 such that a tacky tape 100 mm wide and 100 mm long was adhered to a stainless steel sheet polished by a #280 water-resistant sand paper, and peeled off in a direction of 180° at 23°C and at a rate of 200 mm/min.

The retention was measured in accordance with JIS Z-0237. A tacky tape was adhered to a stainless steel sheet treated as above such that a 25 mm x 10 mm area was contacted thereto, and a time was measured that lapsed until the tacky tape was peeled off from the stainless steel sheet at 23°C under a load of 1 kg.

The results are shown in Table 2.

Table 2

| Run No. | Examples | | | Comparative Example |
|---|---|---|---|---|
| | 1 | 2 | 3 | 1 |
| Block copolymer | $(a_1)$ | $(a_2)$ | $(a_3)$ | BUTYL 268 |
| Tackiness (23°C) [x 1/32"] | 10 | 9 | 8 | 13 |
| Adhesion (23°C) [g/cm] | 1000 | 1250 | 1280 | 714 |
| Retention (23°C) [min.] | 764 | >1500 | >1500 | 7 |

From the data shown in Table 2, it follows that the tackifier composition of this invention is a bit inferior in tackiness to the tackifier composition based on the butyl rubber, but shows the excellent adhesion and the quite excellent retention compared to the latter compopsition.

EXAMPLES 4 to 6 and COMPARATIVE EXAMPLE 2

One hundred parts of each of the three styrene-isobutylene-styrene block copolymers $(a_1)$, $(a_2)$ and $(a_3)$ shown in Referential Example, 100 parts of a hydrogenated product of an aromatic petroleum resin ("ARKONE P-70": a trade name for a product of Arakawa Kagaku K.K., a softening point 70°C) as a tackifier resin, 75 parts of a paraffinic process oil ("FLEX 2050N": a trade name for a product of Fuji Kosan K.K.) and 1 part of an antioxidant were dissolved in toluene to prepare a tackifier solution having a nonvolatile content of 50 %. Then, the solution was coated on a 25-micron thick polyester film to a coating thickness of 25 microns to form a tacky tape. The tackiness, the adhesion and the retention thereof were then measured. On the other hand, for comparison, a hydrogenated product of a styrene-butadiene-styrene block copolymer ("Kraton G-1652": a trade name for a product of Shell Kagaku K.K.) was evaluated as above.

The tackiness was measured at 23°C and 5°C by a probe tack method according to ASTM D-2979. A stainless steel cylindrical probe whose upper end was made of a mirror surface 5 mm in diameter was allowed to approach from below to a tacky tape disposed under a load of 19.6 g with the lower surface being a sticky surface, contacted therewith for 1 second and then retreated downward at a rate of 1 cm/sec. A force occurring at this occasion was measured.

The adhesion and the retention were measured as in Examples 1 to 3.

The results are shown in Table 3.

From the data shown in Table 3, it becomes apparent that the tackifier composition of this invention is inferior in retention but by far superior in tackiness and adhesion, to the tackifier composition based on the hydrogenated product of the styrene-butadiene-styrene block copolymer.

## Table 3

| Run No. | | Examples | | | Comparative Example |
|---|---|---|---|---|---|
| | | 4 | 5 | 6 | 2 |
| Block copolymer | | $(a_1)$ | $(a_2)$ | $(a_3)$ | Kraton G - 1652 |
| Probe Tack [g/5mmø] | 23°C | 1280 | 1060 | 980 | 485 |
| | 5°C | 998 | 730 | 680 | 220 |
| Adhesion (23°C) [g/cm] | | 860 | 862 | 1020 | 183 |
| Retention (40°C) [min.] | | 184 | 394 | 420 | > 1500 |

EXAMPLE 7 and COMPARATIVE EXAMPLE 3

The tackifier solution in Example 1, i.e., the toluene solution of the tackifier composition containing the styrene-isobutylene-styrene block copolymer $(a_1)$ was coated on a 25-micron thick polyester film to a coating thickness of 25 micron to prepare a tacky tape. Meanwhile, for comparison, a sticky tape was likewise prepared by using a tackifier solution having a non-volatile content of 15 % and formed by dissolving in toluene 100 parts of a natural rubber ("PALE CREPE": a Mooney viscosity M1(1 + 4)/100°C 60), 100 parts of an aliphatic petroleum resin ("QUINTONE C100": a trade name for a product of Nippon Zeon Co., Ltd., a softening point 96°C) and 1 part of an antioxidant.

Subsequently, to evaluate the stability to heat and ultraviolet rays of the tackifier, the above tacky tape 10 mm wide and 100 mm long was adhered to a stainless steel sheet polished with a #280 water-resistant sand paper, and allowed to stand in a oven held at 70°C. Then, ultraviolet rays were irradiated from the back of the tacky tape adhered to the stainless steel sheet using a fadeometer, and thereafter the adhesion was measured as in Example 1.

The results are shown in Table 4.

Table 4

| Run No. | Example 7 | | | | | Comparative Example 3 | | | | |
|---|---|---|---|---|---|---|---|---|---|---|
| Tackifier composition | Block copolymer (a₁)/QUINTONE C100/ liquid polybutene = 100/50/50 | | | | | Natural rubber/QUINTONE C100 = 100/100 | | | | |
| Conditions for accelerated degradation | Initial | Time for allowing the product to stand in an oven (hrs.) | | Time for allowing the product to stand in a fadeometer (hrs.) | | Initial | Time for allowing the product to stand in an oven (hrs.) | | Time for allowing the product to stand in a fadeometer (hrs.) | |
| | | 75 | 144 | 24 | 74 | | 72 | 144 | 24 | 74 |
| Adhesion (23°C) [g/cm] | 1000 | 980 | 950 | 1020 | 930 | 850 | 1280 | 360 | 1020 | 270 |
| Peeling state in measuring adhesion * | ○ | ○ | ○ | ○ | ○ | ○ | × | × | × | × |

\* ○ : Destruction of a boundary surface
(The boundary surface between the stainless steel sheet and the tackifier is peeled off.)

From the data shown in Table 4, it is found that the tackifier composition of this invention is quite stable to heat or ultraviolet rays, while the tackifier based on the natural rubber being a typical conjugated diene rubber is degraded due to heat or ultraviolet rays, showing the unstable adhesion and the unwanted peeling state.

**Claims**

1. A tackifier composition comprising

   (a) 100 parts by weight of a block copolymer composed of at least two terminal polymer blocks A and at least one intermediate polymer block B, said block A being a polymer block substantially derived from an aromatic vinyl compound, said block B being a polymer block substantially derived from isobutylene, the content of the aromatic vinyl compound being 5 to 50 % by weight, and the number average molecular weight of the block copolymer being 30,000 to 500,000,

   (b) 20 to 200 parts by weight of a tackifier resin, and

   (c) 5 to 150 parts by weight of a softener.

2. The tackifier composition of claim 1 comprising

   (a) 100 parts by weight of the block copolymer,

   (b) 30 to 180 parts by weight of the tackifier resin, and

   (c) 10 to 130 parts by weight of the softener.

3. The tackifier composition of claim 1 wherein the content of the aromatic vinyl compound of the block copolymer is 10 to 45 % by weight.

4. The tackifier composition of claim 1 wherein the number average molecular weight of the block copolymer is 50,000 to 400,000.

5. The tackifier composition of claim 1 wherein the tackifier resin is at least one type selected from polyterpene resins, aliphatic petroleum resins and an aromatic petroleum resins.

6. The tackifier composition of claim 1 wherein the softener is at least one type selected from paraffinic process oils and liquid polybutene.

7. The tackifier composition of claim 1 wherein the aromatic vinyl compound of the block copolymer is at least one selected from styrene, $\alpha$-methyl styrene, $\beta$-methyl styrene, $\rho$-methyl styrene, t-butyl styrene, monochloro styrene, dichloro styrene, indene and methoxy styrene.